# EUROPEAN PATENT APPLICATION

(11) **EP 4 567 138 A1**
(43) Date of publication of application: **11.06.2025**
(21) Application number: 23307161.2
(22) Date of filing: 08.12.2023
(51) Int. Cl.: C22B 1/02, C01D 15/08, C22B 1/06, C22B 1/10, C22B 3/04, C22B 3/08, C22B 26/12

(54) **LITHIUM EXTRACTION**

(71) Applicant: ImerTech SAS, 75015 Paris (FR)
(72) Inventor: Ineich, Theodore, Toulouse (FR); Jean, Gregoire, Paris (FR)
(74) Representative: Faure-Geors, Vanessa

(57) **Abstract**

A method for extracting lithium from lithium-bearing mica comprises: calcining the lithium-bearing mica in the presence of potassium sulfate and calcium sulfate to produce a calcined material.

## Description

### TECHNICAL FIELD

The present disclosure concerns methods for extracting lithium from lithium-bearing mica and uses of potassium sulfate and calcium sulfate in the extraction of lithium from lithium-bearing mica.

### BACKGROUND

Lithium is a highly reactive alkali metal and has the lowest density of all metals. Lithium and compounds thereof are used in the production of glass and ceramics, lubricants, metallurgical fluxes, battery materials, and pharmaceuticals, among other applications.

Due to its high chemical reactivity, lithium is not found as elemental lithium metal in nature but only occurs in the form of compounds or dissolved in water. Lithium for industrial use can be obtained by extraction from pegmatite ores such as spodumene or petalite, from lithium-bearing mica minerals such as lepidolite or zinnwaldite, from hectorite clay, or from salty brine.

The extraction of lithium from lithium-bearing mica typically involves roasting the mica in the presence of sodium sulfate to produce a calcine. Then, it usually involves leaching the calcine to produce a pregnant leach solution (PLS) containing dissolved lithium. Lithium salts can be precipitated from the PLS. This method, however, suffers from several drawbacks.

First, the calcine and the PLS produced in this way typically contain a high concentration of sodium. Removal of sodium (which is effectively an impurity in the calcine and PLS) is difficult and complicates the lithium extraction process.

Second, mixtures of mica and sodium sulfate tend to sinter and/or fuse at typical roasting temperatures, causing damage to rotary kilns and leading to loss of lithium. This necessitates frequent stopping of processing for maintenance of the kiln and/or roasting at low temperatures, further reducing the effectiveness of the lithium extraction.

Third, roasting mica with sodium sulfate also tends to lead to extraction of rubidium from the mica, which dissolves as an impurity in the calcine and the PLS and requires subsequent removal. High concentrations of Na and/or Rb in the calcine and the PLS can also lead to the unwanted crystallisation of double or triple salts of Li, Na and Rb.

Improved methods of extracting lithium from lithium-bearing mica are therefore desired.

### SUMMARY

According to a first aspect, there is provided a method for extracting lithium from lithium-bearing mica. The method comprises calcining the lithium-bearing mica which has a particle size d80 of less than about 250 microns in the presence of potassium sulfate in the range of from 32 to 55 g per 100 g of lithium-bearing mica and calcium sulfate in the range of 15 to 65 g per 100 g of lithium-bearing mica at a temperature from about 850 °C to about 1050 °C to produce a calcined material.

According to a second aspect, there is provided a method for extracting lithium from lithium-bearing mica, comprising calcining the lithium-bearing mica which has a particle size d80 of less than about 250 microns at a temperature in the range of from about 850 to about 1050 °C in the presence of potassium sulfate in the range of from 32 to 55 g per 100 g of mica and calcium sulfate in the range of 15 to 65 g per 100 g of lithium bearing mica to produce a higher yield of lithium and a reduced amount of cesium in comparison to the same method for the same composition of lithium bearing mica in which the potassium sulfate and the calcium sulfate are outside the aforedefined ranges.

According to a third aspect, there is provided the use of potassium sulfate and calcium sulfate to extract lithium from lithium-bearing mica. For example, the lithium-bearing mica may have a particle size d80 of less than about 250 microns, and may be calcined in the presence of the potassium sulfate in the range of from 32 to 55 g per 100 g of lithium-bearing mica and the calcium sulfate in the range of 15 to 65 g per 100 g of lithium-bearing mica to produce a calcined material at a temperature from about 850 °C to about 1050 °C.

For either the first aspect, second aspect, or the third aspect, calcining the lithium-bearing mica in the presence of potassium sulfate and calcium sulfate may comprise calcining a mixture comprising: (a) a lithium-bearing mica; (b) from about 32 g to about 50 g, for example from about 32 g to about 40 g, or from about 35 g to about 40 g, of potassium sulfate per 100 g of lithium-bearing mica; and (c) from about 15 g to about 50 g, for example, from about 30 g to about 40 g, of calcium sulfate per 100 g of lithium-bearing mica.

The mixture may comprise less than about 20 g, for example, less than about 10 g, or less than about 8 g, of sodium sulfate per 100 g of lithium-bearing mica, optionally wherein the mixture is substantially free of sodium sulfate.

Optionally the mixture may comprise at least about 5 g of sodium sulphate per 100 g of lithium-bearing mica.

The mixture may comprise, per 100 g of lithium-bearing mica less than about 10 g, for example, less than about 5 g of each of metal oxides, metal hydroxides, metal sulphides, metal carbonates and/or metal chlorides, optionally wherein the mixture is substantially free of metal oxides, metal hydroxides, metal sulphides, metal carbonates and/or metal chlorides. The metal may be an alkali metal, an alkaline earth metal, or a transition metal.

The mixture may consist essentially of the lithium-bearing mica, the potassium sulfate and the calcium sulfate.

Alternatively, the mixture may consist essentially of the lithium-bearing mica, the potassium sulfate, the calcium sulfate and the sodium sulfate.

The lithium-bearing mica may have a d₈₀ from about 50 µm to about 250 µm, for example, from about 100 µm to about 200 µm.

The method or use may comprise calcining the mixture at a temperature from about 900 °C to about 1000 °C, for example, for from about 10 minutes to about 180 minutes, for example, from about 15 minutes to about 60 minutes.

The lithium-bearing mica may comprise lepidolite, muscovite, polylithionite and/or zinnwaldite.

The calcium sulfate may be provided in the form of (a) calcium sulfate dihydrate, for example, gypsum, (b) anhydrous calcium sulfate, and/or (c) calcium sulfate hemihydrate.

The method or use may further comprise leaching the calcined material with an aqueous solvent to form a solution containing lithium.

The aqueous solvent may be water. Additionally, or alternatively, the aqueous solvent may be heated to a temperature from about 70 °C to about 120 °C. Additionally or alternatively, leaching the calcined material with the aqueous solvent may take place at a pressure from about atmospheric pressure to up to about 500 kPa.

The calcined material may be crushed prior to leaching with the aqueous solvent.

The method or use may comprise precipitating a lithium salt from the solution.

According to a third aspect, there is provided the use of potassium sulfate and calcium sulfate to reduce extraction of rubidium during extraction of lithium from lithium-bearing mica.

The lithium-bearing mica may be calcined in the presence of the potassium sulfate and the calcium sulfate to produce a calcined material. Additionally or alternatively, the reduction of extraction of rubidium may be such that less than about 18 wt. %, for example, less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted.

According to a fourth aspect, there is provided the use of potassium sulfate and calcium sulfate in a mixture comprising the potassium sulfate, the calcium sulfate and lithium-bearing mica to reduce sintering and/or fusion of the mixture during calcination of the mixture to extract lithium from the lithium-bearing mica.

It thus allow to use a wider range of temperatures in the kiln.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### FIGURES

Embodiments will now be described by way of example only, with reference to the Figures, in which:
**Figure 1** is a powder X-ray diffraction pattern obtained for a lithium-bearing mica; and
**Figure 2** is a plot of the percentage of rubidium extracted from a lithium-bearing mica on calcination with sodium sulfate or potassium sulfate, as a function of the sodium sulfate or potassium sulfate content.

### DETAILED DESCRIPTION

It has surprisingly been found that calcining lithium-bearing mica in the presence of potassium sulfate and calcium sulfate leads to less sintering and fusion than occurs when lithium-bearing mica is calcined in the presence of alternative salts such as sodium sulfate.

### Lithium-bearing mica

As used herein, the term "mica" refers to the mica group of hydrated phyllosilicate minerals.

The mica group includes, for example, biotite (i.e. K(Mg,Fe)₃(AlSi₃O₁₀)(F,OH)₂), fuchsite (i.e. K(Al,Cr)₂(AlSi₃O₁₀)(OH)₂), muscovite (i.e. KAl₂(AlSi₃O₁₀)(F,OH)₂), phlogopite (i.e. KMg₃(AlSi₃O₁₀)(F,OH)₂), lepidolite (i.e. K(Li,Al)₃(Al,Si,Rb)₄O₁₀(F,OH)₂), margarite (i.e. CaAl₂(Al₂Si₂)O₁₀(OH)₂), glauconite (i.e. (K,Na)(Al,Mg,Fe)₂(Si,Al)₄O₁₀(OH)₂), paragonite (i.e. NaAl₂(AlSi₃O₁₀)(OH)₂), ephesite (i.e. NaLiAl₂(Al₂Si₂O₁₀)(OH)₂), clintonite (i.e. CaAlMg₂(SiAl₃O)(OH)₂), polythionate (i.e. KLi₂Al(Si₄O₁₀)(F,OH)₂) and zinnwaldite (i.e. KLiFeAl(AlSi₃)O₁₀(OH,F)₂), among others.

As used herein, the term "lithium-bearing mica" refers to those members of the mica group which comprise lithium at greater than impurity levels, for example, wherein the members comprise sufficient quantities of lithium that Li appears in the respective chemical formulae for the members.

The lithium-bearing mica used may comprise a single lithium-bearing mica group mineral or a mixture of two or more different lithium-bearing mica group minerals.

The lithium-bearing mica may comprise (e.g. consist essentially of, consist of, or be) lepidolite (i.e. K(Li,Al)₃(Al,Si,Rb)₄O₁₀(F,OH)₂).

The lithium-bearing mica may comprise (e.g. consist essentially of, consist of, or be) zinnwaldite (i.e. KLiFeAl(AlSi₃)O₁₀(OH,F)₂).

The lithium-bearing mica may comprise (e.g. consist essentially of, consist of, or be) a lithium-bearing mica in the polylithionite-trilithionite series (i.e. the Li₂Al(Si₄O₁₀)(F,OH)₂ - K(Li_{1.5}Al)(AlSi₃O₁₀)(F,OH)₂ series).

The lithium-bearing mica may comprise (e.g. consist essentially of, consist of, or be) muscovite (i.e. KAl₂(AlSi₃O₁₀)(F,OH)₂).

The lithium-bearing mica may comprise (e.g. consist essentially of, consist of, or be) lepidolite, muscovite, polylithionite and/or zinnwaldite. The concentration of lepidolite, muscovite, polylithionite and/or zinnwaldite may be in the range of from 0.5 to 100 wt.% based on the weight of the lithium bearing mica.

The lithium bearing mica may in fact be lepidolite, muscovite, polylithionite or zinnwaldite.

The lithium-bearing mica may comprise lepidolite, muscovite, polylithionite and/or zinnwaldite. The lithium-bearing mica may comprise: from about 40 wt. % to about 94,9 wt. % lepidolite; from about 5 wt. % to about 15 wt. % muscovite; from about 0.1 wt. % to about 5.0 wt. % zinnwaldite and/or from 40 wt.% to about 94,9 wt.% polylithionite. For example, the lithium-bearing mica may comprise: from about 50 wt. % to about 94,9 wt. % lepidolite; from about 5 wt. % to about 15 wt. % muscovite; from about 0.1 wt. % to about 3 wt. % zinnwaldite and/ or from 50 wt.% to about 94,9 wt.% polylithionite.

Preferably, the lithium-bearing mica may comprise at least 10 wt.%, or at least 50 wt.% of the sum of lepidolite, muscovite, polylithionite and/or zinnwaldite, based on the total weight of the lithium-bearing mica.

The lithium-bearing mica may comprise one or more non-mica group minerals. For example, the lithium-bearing mica may comprise one or more non-mica minerals associated to granitic deposits such as feldspar (i.e. including endmembers KAlSi₃O₈ (potassium feldspar, e.g. microcline or orthoclase), NaAlSi₃O₈ (albite) and/or CaAl₂Si₂O₈ (anorthite)), quartz, dolomite (i.e. CaMg(CO₃)₂), and/or magnesite (i.e. MgCO₃). Preferably the lithium-bearing mica may comprise quartz, and/or feldpspar. Additionally or alternatively, the lithium-bearing mica may comprise talc (i.e. the magnesium silicate mineral (Mg₃Si₄O₁₀(OH)₂)), chlorite (i.e. (Mg,Fe)₃(Si,Al)₄O₁₀(OH)₂·(Mg,Fe)₃(OH)₆), kaolinite (i.e. Al₂Si₂O₅(OH)₄) and/or petalite (i.e. LiAlSi₄O₁₀). Preferably, the lithium-bearing mica may comprise kaolinite.

For example, the lithium-bearing mica may comprise lepidolite, muscovite and/or zinnwaldite, and one or more of kaolinite, quartz, feldspar and petalite. For example, the lithium-bearing mica may comprise lepidolite, muscovite, zinnwaldite, kaolinite, quartz, feldspar and petalite.

The total amount of non-mica group minerals may be less than about 40 wt. %, for example, less than about 35 wt. %, or less than about 30 wt. %, or less than about 27.5 wt. %, or less than about 25 wt. %, of the lithium-bearing mica.

The mineral composition of the lithium-bearing mica may be determined using semiquantitative powder X-ray diffraction (XRD). The XRD measurements may be obtained by the following method. A sample of the lithium-bearing mica is milled to a particle size (by sedigraph) of less than 10 µm. A lump-free powder is generated and inserted into an XRD sample holder by back filling, using a suitable method to ensure that preferential orientation is avoided. The sample is scanned on the XRD (e.g. a Malvern Panalytical X'Pert PRO). The scan is viewed on the XRD analysis software HighScore Plus (available from Malvern Panalytical) and XRD peaks are assigned according to the PDF-2 minerals database (available from the International Centre for Diffraction Data). XRD peak information is also available from public databases (such as the Mineralogy Database at http://webmineral.com). The amount of each mineral in the sample is determined from the corresponding XRD peak heights by the Reference Intensity Ratio (RIR) method.

The chemical composition of the lithium-bearing mica may be determined using Energy Dispersive X-Ray Fluorescence (EDXRF), Inductively Coupled Plasma Optical Emission Spectrometry (ICP-OES), Inductively Coupled Plasma Mass Spectrometry (ICP-MS) and/or ion selective electrode analysis.

The lithium-bearing mica may comprise (e.g. as measured by EDXRF) no less than about 1.0 wt. %, for example, from about 1.0 wt. % to about 10 wt. %, or from about 2.0 wt. % to about 6.0 wt. %, or from about 2.5 wt. % to about 5.0 wt. %, Li₂O.

The lithium-bearing mica may comprise (e.g. as measured by EDXRF): from about 35 wt. % to about 65 wt. %, for example, from about 40 wt. % to about 60 wt. %, or from about 55 wt. % to about 65 wt. %, SiO₂; from about 15 wt. % to about 35 wt. %, for example, from about 20 wt. % to about 30 wt. %, Al₂O₃; no more than about 10.0 wt. %, for example, no more than about 8.0 wt. %, Fe₂O₃; no more than about 1.0 wt. %, for example, no more than about 0.1 wt. %, MgO; no more than about 2.0 wt. %, for example, no more than about 1.0 wt. % Na₂O; from about 1 wt. % to about 15 wt. %, for example, from about 5 wt. % to about 10 wt. %, K₂O; and no less than about 1.0 wt. %, for example, from about 1.0 wt. % to about 10 wt. %, or from about 1.0 wt. % to about 5.0 wt. %, or from about 2.0 wt. % to about 5.0 wt. %, or from about 3.0 wt. % to about 5.0 wt. %, Li₂O.

The lithium-bearing mica may comprise (e.g. as measured by ICP-OES or ICP-MS as appropriate): no less than about 2000 g/t, for example, no less than about 6000 g/t, or no less than about 10000 g/t, or no less than about 15000 g/t, or from about 10000 g/t to about 30000 g/t, or from about 15000 g/t to about 20000 g/t, Li; and/or from about 4000 g/t to about 20000 g/t, for example, from about 10000 g/t to about 14000 g/t, Rb.

The lithium-bearing mica may comprise (e.g. as measured by ion selective electrode analysis) from about 1 % to about 10 %, for example, from about 4 % to about 8 %, F.

A suitable lithium-bearing mica is available from Imerys Ceramics, France, obtained from Imerys Ceramics, France, obtained from the Imerys Kaolins de Beauvoir mine.

Particle size properties are measured by wet Malvern laser scattering (standard ISO 13320-1:2020). In this technique, the size of particles in powders, suspensions and emulsions may be measured using the diffraction of a laser beam, based on the application of Mie theory. Such a machine, for example a Malvern Mastersizer S (as supplied by Malvern instruments), provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by volume of the particles which have an equivalent spherical diameter less than that d₅₀ value. The d₉₈, d₉₅, d₉₀, d₇₅, d₂₅ and the d₁₀ are the values determined in this way of the particle e.s.d. at which there are 98%, 95%, 90%, 75%, 25% and 10% respectively by volume of the particles which have an equivalent spherical diameter less than that d₉₈, d₉₅, d₉₀, d₇₅, d₂₅ or d₁₀ value. For the avoidance of doubt, the measurement of particle size using laser light scattering is not an equivalent method to a sedimentation measurement method.

The lithium-bearing mica may have a d₉₀, as measured by laser scattering, no less than about 50 µm, for example, no less than about 100 µm, or no less than about 125 µm, or no less than about 150 µm. The lithium-bearing mica may have a d₈₀ no more than about 250 µm, or no more than about 200 µm, or no more than about 150 µm. The lithium-bearing mica may have a d₈₀ from about 50 µm to about 250 µm, or from about 50 µm to about 200 µm, or from about 50 µm to about 150 µm, or from about 100 µm to about 250 µm, or from about 100 µm to about 200 µm, or from about 100 µm to about 150 µm, or from about 125 µm to about 250 µm, or from about 125 µm to about 200 µm, or from about 125 µm to about 150 µm, or from about 150 µm to about 250 µm or from about 150 µm to about 200 µm.

The potassium sulfate (i.e. K₂SO₄) may be any commercially available fertilizer grade, for example SoluPotasse^{®} available from Tessenderlo. The potassium sulfate may have a d₉₀, as measured by laser, from about 10 µm to about 300 µm.

The calcium sulfate may be provided in the form of anhydrous calcium sulfate (i.e. CaSO₄), as calcium sulfate hemihydrate (i.e. (CaSO₄)₂·H₂O), and/or as calcium sulfate dihydrate (i.e. CaSO₄·2H₂O). Anhydrous calcium sulfate occurs naturally as the mineral anhydrite. Calcium sulfate hemihydrate, also known as plaster of Paris, naturally occurs as the mineral bassanite. It might be α-hemihydrate and/or β-hemihydrate. Calcium sulfate dihydrate occurs naturally as the mineral gypsum (which may occur as selenite, satin spar, desert rose, gypsum flower or alabaster). The calcium sulfate may have a d₅₀, as measured by laser, from about 10 µm to about 300 µm.

The sodium sulfate (i.e. Na₂SO₄) may be any commercially available grade, for example Emprove^{®} essential available from Merck. The sodium sulfate may have a d₅₀, as measured by laser, from about 10 µm to about 300 µm. The sodium sulfate is not in the form of glaserite.

### Mineral feed mixture

The method may comprise calcining a mixture comprising (e.g. consisting essentially of, or consisting of) the lithium-bearing mica, the potassium sulfate and the calcium sulfate.

The mixture may comprise no less than about 32 g, or no less than about 33 g, or no less than about 34 g, or no less than about 35 g of potassium sulfate per 100 g of lithium-bearing mica. The mixture may comprise no more than about 55 g, or no more than about 50 g, or no more than about 45 g, or no more than about 40 g of potassium sulfate per 100 g of lithium-bearing mica. The mixture may comprise from about 32 g to about 55 g, for example, from about 32 g to about 50 g, or from about 32 g to about 40 g, or from about 33 g to about 55 g, or from about 33 g to about 50 g, or from about 33 g to about 45 g, or from about 33 g to about 40 g, or from about 35 g to about 55 g, or from about 35 g to about 50 g, or from about 35 g to about 45 g, or from about 35 g to about 40 g of potassium sulfate per 100 g of lithium-bearing mica.

The mixture may comprise no less than about 15 g, or no less than about 20 g, or no less than about 30 g of calcium sulfate per 100 g of lithium-bearing mica. The mixture may comprise no more than about 65 g, or no more than about 60 g, or no more than about 55 g, or no more than about 50 g, or no more than about 45 g, or no more than about 40 g of calcium sulfate per 100 g of lithium-bearing mica. The mixture may comprise from about 15 g to about 65 g, or from about 15 g to about 60 g, or from about 15 g to about 55 g, or from about 15 g to about 50 g, or from about 15 g to about 45 g, or from about 15 g to about 40 g of calcium sulfate per 100 g of lithium-bearing mica.

The mixture may comprise less than about 20 g, or less than about 15 g, or less than about 10, or less than about 8 g, or less than about 1 g of sodium sulfate per 100 g of lithium-bearing mica. For example, the mixture may be substantially free of sodium sulfate. For example, it may be that no sodium sulfate is added to the mixture comprising the lithium-bearing mica, potassium sulfate and calcium sulfate.

Alternatively, the mixture may comprise at least about 5 g of sodium sulfate per 100 g of lithium-bearing mica, for example, the mixture may comprise from about 5 g to 20 g, or from 5 g to 10 g of sodium sulfate per 100 g of lithium-bearing mica.

The mixture may comprise, per 100 g of lithium-bearing mica, less than about 10 g, for example, less than about 5 g, or less than about 1 g, of each of metal oxides, metal hydroxides, metal sulphides, metal carbonates and/or metal chlorides. For example, the mixture may be substantially free of metal oxides, metal hydroxides, metal sulphides, metal carbonates and/or metal chlorides. For example, it may be that no metal oxides, metal hydroxides, metal sulphides, metal carbonates and/or metal chlorides are added to the mixture comprising the lithium-bearing mica, potassium sulfate and calcium sulfate. The metal in each of the metal oxides, metal hydroxides, metal sulphides, metal carbonates and/or metal chlorides may be an alkali metal, an alkaline earth metal, or a transition metal.

### Calcination

Calcination of the mixture may be carried out at a temperature (i.e. a calcination temperature) no less than about 850 °C, for example, no less than about 900 °C. Calcination of the mixture may be carried out at a temperature (i.e. a calcination temperature) no more than about 1050 °C, for example, no more than about 1000 °C, or no more than about 950 °C. Calcination of the mixture may be carried out at a temperature (i.e. a calcination temperature) from about 850 °C to about 1050 °C, for example, from about 850 °C to about 1000 °C, or from about 850 °C to about 950 °C, or from about 900 °C to about 1050 °C, or from about 900 °C to about 1000 °C, or from about 900 °C to about 950 °C.

Calcination of the mixture may be carried out for no less than about 10 minutes, for example, no less than about 15 minutes, or no less than about 20 minutes. Calcination of the mixture may be carried out for no more than about 180 minutes, for example, no more than about 165 minutes, or no more than about 150 minutes, or no more than about 135 minutes, or no more than about 120 minutes, or no more than about 105 minutes, or no more than about 90 minutes, or no more than about 75 minutes, or no more than about 60 minutes. Calcination of the mixture may be carried out for from about 10 minutes to about 180 minutes, for example, from about 10 minutes to about 165 minutes, or from about 10 minutes to about 150 minutes, or from about 10 minutes to about 135 minutes, or from about 10 minutes to about 120 minutes, or from about 10 minutes to about 105 minutes, or from about 15 minutes to about 90 minutes, or from about 15 minutes to about 75 minutes, or from about 15 minutes to about 60 minutes. The time for which calcination is carried out is the time at which the mixture is held at the calcination temperature.

The mixture may be calcined in any suitable container such as a quartz crucible, an alumina crucible, a mullite crucible, or a zirconia crucible.

The mixture may be calcined in any suitable type of furnace, such as a muffle furnace, a rotary kiln, a straight grate kiln, a multiple hearth furnace or any other classical industrial furnace.

The mixture may be calcined in a kiln, such as a rotary kiln, a grate kiln, a rotary hearth furnace, or a fluidised bed kiln.

The mixture may be prepared as a powder or as a pellet before calcining.

The method may comprise allowing the calcined material to cool within the furnace or kiln until, for example, room temperature is reached. Alternatively, the method may comprise allowing the calcined material to cool outside the furnace or the kiln until, for example, room temperature is reached. For example, the method may comprise allowing the calcined material to cool in a cooling device.

The method may comprise crushing, grinding or milling the calcined material (i.e. calcine) after calcination.

The method may not require decrepitation of the mixture prior to calcination.

### Calcined material

The calcined material (i.e. calcine) is the solid material obtained on calcination of the mixture.

The calcined material is typically a granular (e.g. particulate) material. It may be that the calcined material is granular (e.g. particulate) immediately after calcination, e.g. before any subsequent crushing, grinding or milling operations have been performed. For example, it may be that the calcined material has a sandy texture immediately after calcination, e.g. before any subsequent crushing, grinding or milling operations have been performed. Alternatively, the calcined material immediately after calcination may be sintered in some locations. However, the calcined material is not typically sintered throughout or fused (e.g. melted and resolidified).

The method may comprise crushing, grinding or milling the calcined material (i.e. calcine) after calcination. The calcined material may be crushed, ground or milled to achieve a particulate which passes through a mesh having a maximum mesh number (i.e. holes per inch) of 10, corresponding to a maximum mesh size of about 2 mm.

### Leaching

The method may comprise leaching the calcined material with an aqueous solvent to form a solution containing lithium. The solution containing lithium may be referred to as a pregnant leach solution (PLS). The leaching can be performed by any known method.

The aqueous solvent may be water. For example, the aqueous solvent may be deionised (e.g. demineralised) water.

Alternatively, the aqueous solvent may be an aqueous solution of, e.g., one or more compounds, one or more salts, one or more acids (e.g. sulphuric acid), and/or one or more bases (e.g. sodium hydroxide).

The aqueous solvent (e.g. water) may be heated. The aqueous solvent may be heated to a temperature from about 70 °C to about 120 °C, for example, from about 80 °C to about 100 °C, or from about 90 °C to about 100 °C.

The method may comprise mixing the calcined material with the aqueous solvent (e.g. water) to form a mixture and then heating the mixture. Additionally or alternatively, the method may comprise heating the aqueous solvent (e.g. water) before mixing the calcined material and the aqueous solvent (e.g. water) together.

The leaching may take place at a pressure no less than about atmospheric pressure. The leaching may take place at a pressure from about atmospheric pressure to about 500 kPa, for example, from about atmospheric pressure to about 400 kPa, or from about atmospheric pressure to about 300 kPa, or from about atmospheric pressure to about 200 kPa..

The leaching may be carried out with a ratio of liquid (i.e. aqueous solvent) to solid (i.e. calcined material), by weight, no less than about 1:2, for example, no less than about 1:2, no less than about 1:1. The leaching may be carried out with a ratio of liquid (i.e. aqueous solvent) to solid (i.e. calcined material), by weight, no more than about 10:1, for example, no more than about 8:1, or no more than about 6:1, or no more than about 4:1, or no more than about 3:1.

The mixture of calcined material and aqueous solvent may be agitated mechanically (e.g. stirred) during the leaching.

The leaching may be carried out for from about 10 minutes to about 180 minutes, for example, from about 10 minutes to about 120 minutes, or from about 10 minutes to about 110 minutes, or from about 30 minutes to about 90 minutes, or from about 40 minutes to about 80 minutes, or from about 50 minutes to about 70 minutes, for example, about 60 minutes.

Following leaching, the remaining solids may be separated from the liquid (i.e. the pregnant leach solution). The solids may be separated from the liquid by filtration, for example, using a Büchner funnel.

### Pregnant leach solution

The solution (i.e. the pregnant leach solution) typically contains lithium in the form of dissolved lithium (Li⁺) ions. For example, the solution may contain lithium in the form of dissolved lithium-containing ionic compounds such as dissolved lithium-containing salts (e.g. lithium sulfate (Li₂SO₄), potassium lithium sulfate (KLiSO₄), potassium lithium sodium sulfate (Li₂KNa(SO₄)₂, etc.).

In addition to lithium, the solution may contain sodium, potassium, calcium, iron, aluminium, fluorine, manganese and/or rubidium (e.g. in the form of dissolved sodium (Na⁺), potassium (K⁺), calcium (Ca²⁺), iron (Fe²⁺) aluminum (Al³⁺), fluoride (F⁻), manganese (Mn²⁺) and/or rubidium (Rb⁺) ions). For example, the solution may contain sodium, potassium, calcium, iron, aluminium, fluorine, manganese and/or rubidium in the form of dissolved sodium-, potassium-, calcium-, iron-, aluminium-, fluorine-, manganese- and/or rubidium-containing ionic compounds, e.g. salts (which may or may not also contain lithium).

The concentration of dissolved metals (e.g. metal ions) in the solution can be measured using ICP-OES, ICP-MS or Ion selective electrode analysis as appropriate.

The solution may comprise from about 800 mg/L to about 20000 mg/L lithium.

The solution may comprise no more than about 500 mg/L, for example, no more than about 400 mg/L, or no more than about 300 mg/L, or no more than about 200 mg/L, or no more than about 150 mg/L,or no more than about 130 mg/L, or no more than about 100 mg/L, or no more than about 90 mg/L, or no more than about 80 mg/L, or no more than about 75 mg/L, or no more than about 70 mg/L, or no more than about 60 mg/L, or no more than about 55 mg/L, rubidium. The solution may comprise no less than about 10 mg/L, for example, no less than about 20 mg/L, or no less than about 30 mg/L, or no less than about 40 mg/L, or no less than about 50 mg/L, rubidium.

The solution may comprise: from about 800 mg/L to about 20000 mg/L, for example, from about 800 mg/L to about 15000 mg/L, or from about 850 mg/L to about 10000 mg/L, or from about 900 mg/L to about 5000 mg/L, or from about 1000 mg/L to about 2000 mg/L lithium; from about 50 mg/L to about 500 mg/L, or from about 50 mg/L to about 300 mg/L, or from about 50 mg/L to about 100 mg/L, or from about 50 mg/L to about 75 mg/L, or from about 50 mg/L to about 60 mg/L, or from about 50 mg/L to about 55 mg/L, rubidium.

### Lithium salt

The method may comprise precipitating a lithium salt from the solution (i.e. the pregnant leach solution).

Precipitation of the lithium salt may be achieved by adding a precipitant (i.e. a reagent which causes the lithium salt to precipitate) to the pregnant leach solution. The precipitant may cause precipitation of the lithium salt due to, for example, a salt metathesis/displacement reaction and/or the common-ion effect.

The precipitant may be provided in the form of a (e.g. aqueous) precipitant solution which is added to the pregnant leach solution.

The precipitant may be a carbonate, for example, sodium carbonate (Na₂CO₃) and/or potassium carbonate (K₂CO₃), which may cause lithium carbonate (Li₂CO₃) to precipitate from the pregnant leach solution.

The precipitant and/or the pregnant leach solution may be heated before and/or during the precipitation process, for example, because the solubility of some lithium salts (such as lithium carbonate) in water decreases with increasing temperature.

The method may comprise concentrating the pregnant leach solution prior to precipitating the lithium salt. The pregnant leach solution may be concentrated by evaporation, for example, by heating (e.g. boiling) the pregnant leach solution.

The precipitated lithium salt may be recovered by filtering.

### Uses

The invention extends to the use of potassium sulfate and calcium sulfate to extract lithium from lithium-bearing mica, for example, by any method described herein. For example, the invention extends to the use of potassium sulfate and calcium sulfate, without the use of sodium sulfate, or with a low amount of sodium sulfate (e.g. from about 5 g to about 20 g, preferably from about 5 g to about 10 g, of sodium sulfate per 100g of lithium-bearing mica), to extract lithium from lithium-bearing mica.

The invention extends to the use of potassium sulfate, in combination with calcium sulfate, to extract lithium from lithium-bearing mica, for example, by any method described herein. For example, the invention extends to the use of potassium sulfate, in combination with calcium sulfate, without the use of sodium sulfate, or with a low amount of sodium sulfate (e.g. from about 5 g to about 20 g, preferably from about 5 g to about 10 g, of sodium sulfate per 100g of lithium-bearing mica), to extract lithium from lithium-bearing mica, for example, by any method described herein.

The invention extends to the use of calcium sulfate, in combination with potassium sulfate, to extract lithium from lithium-bearing mica, for example, by any method described herein. For example, the invention extends to the use of calcium sulfate, in combination with potassium sulfate, without the use of sodium sulfate, or with a low amount of sodium sulfate (e.g. from about 5 g to about 20 g, preferably from about 5 g to about 10 g, of sodium sulfate per 100g of lithium-bearing mica), to extract lithium from lithium-bearing mica.

The invention extends to the use of potassium sulfate and calcium sulfate (for example, potassium sulfate, in combination with calcium sulfate, or calcium sulfate, in combination potassium sulfate) to suppress extraction of rubidium during extraction of lithium from lithium-bearing mica, for example, by any method described herein. For example, the invention extends to the use of potassium sulfate and calcium sulfate (for example, potassium sulfate, in combination with calcium sulfate, or calcium sulfate, in combination potassium sulfate), without the use of sodium sulfate, or with a low amount of sodium sulfate (e.g. from about 5 g to about 20 g, preferably from about 5 g to about 10 g, of sodium sulfate per 100g of lithium-bearing mica), to suppress extraction of rubidium during extraction of lithium from lithium-bearing mica, for example, by any method described herein.

For example, the invention extends to the use of potassium sulfate and calcium sulfate (for example, potassium sulfate, in combination with calcium sulfate, or calcium sulfate, in combination potassium sulfate) to suppress extraction of rubidium during extraction of lithium from lithium-bearing mica (for example, by any method described herein), such that less than about 18 wt. %, for example, less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted. For example, the invention extends to the use of potassium sulfate and calcium sulfate (for example, potassium sulfate, in combination with calcium sulfate, or calcium sulfate, in combination potassium sulfate), without the use of sodium sulfate, or with a low amount of sodium sulfate (e.g. from about 5 g to about 20 g, preferably from about 5 g to about 10 g, of sodium sulfate per 100g of lithium-bearing mica), to suppress extraction of rubidium during extraction of lithium from lithium-bearing mica (for example, by any method described herein), such that less than about 18 wt. %, for example, less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted.

For example, the invention extends to the use of potassium sulfate as a rubidium extraction suppressor in the extraction of lithium from lithium-bearing mica (for example, by any method described herein), wherein the extraction of lithium from the lithium-bearing mica comprises calcining the lithium-bearing mica in the presence of calcium sulfate and the potassium sulfate. For example, the invention extends to the use of potassium sulfate as a rubidium extraction suppressor in the extraction of lithium from lithium-bearing mica (for example, by any method described herein), wherein the extraction of lithium from the lithium-bearing mica comprises calcining the lithium-bearing mica in the presence of calcium sulfate and the potassium sulfate, without the use of sodium sulfate, or with a low amount of sodium sulfate (e.g. from about 5 g to about 20 g, preferably from about 5 g to about 10 g, of sodium sulfate per 100g of lithium-bearing mica).

The invention extends to the use of potassium sulfate and calcium sulfate (for example, potassium sulfate, in combination with calcium sulfate, or calcium sulfate, in combination potassium sulfate) to suppress extraction of cesium during extraction of lithium from lithium-bearing mica, for example, by any method described herein. For example, the invention extends to the use of potassium sulfate and calcium sulfate (for example, potassium sulfate, in combination with calcium sulfate, or calcium sulfate, in combination potassium sulfate), without the use of sodium sulfate, or with a low amount of sodium sulfate (e.g. from about 5 g to about 20 g, preferably from about 5 g to about 10 g, of sodium sulfate per 100g of lithium-bearing mica), to suppress extraction of cesium during extraction of lithium from lithium-bearing mica, for example, by any method described herein.

For example, the invention extends to the use of potassium sulfate and calcium sulfate (for example, potassium sulfate, in combination with calcium sulfate, or calcium sulfate, in combination potassium sulfate) to suppress extraction of cesium during extraction of lithium from lithium-bearing mica (for example, by any method described herein), such that less than about 18 wt. %, for example, less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted. For example, the invention extends to the use of potassium sulfate and calcium sulfate (for example, potassium sulfate, in combination with calcium sulfate, or calcium sulfate, in combination potassium sulfate), without the use of sodium sulfate, or with a low amount of sodium sulfate (e.g. from about 5 g to about 20 g, preferably from about 5 g to about 10 g, of sodium sulfate per 100g of lithium-bearing mica), to suppress extraction of cesium during extraction of lithium from lithium-bearing mica (for example, by any method described herein), such that less than about 18 wt. %, for example, less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted.

For example, the invention extends to the use of potassium sulfate as a cesium extraction suppressor in the extraction of lithium from lithium-bearing mica (for example, by any method described herein), wherein the extraction of lithium from the lithium-bearing mica comprises calcining the lithium-bearing mica in the presence of calcium sulfate and the potassium sulfate. For example, the invention extends to the use of potassium sulfate as a cesium extraction suppressor in the extraction of lithium from lithium-bearing mica (for example, by any method described herein), wherein the extraction of lithium from the lithium-bearing mica comprises calcining the lithium-bearing mica in the presence of calcium sulfate and the potassium sulfate, without the use of sodium sulfate, or with a low amount of sodium sulfate (e.g. from about 5 g to about 20 g, preferably from about 5 g to about 10 g, of sodium sulfate per 100g of lithium-bearing mica).

The invention extends to the use of potassium sulfate and calcium sulfate (for example, potassium sulfate, in combination with calcium sulfate, or calcium sulfate, in combination potassium sulfate) in a mixture comprising the potassium sulfate, the calcium sulfate and lithium-bearing mica to reduce (e.g. suppress or inhibit, for example, prevent) sintering and/or fusion (e.g. melting) of the mixture during calcination of the mixture (for example, by any method described herein) to extract lithium from the lithium-bearing mica. For example, the invention extends to the use of potassium sulfate and calcium sulfate (for example, potassium sulfate, in combination with calcium sulfate, or calcium sulfate, in combination potassium sulfate), without the use of sodium sulfate, or with a low amount of sodium sulfate (e.g. from about 5 g to about 20 g, preferably from about 5 g to about 10 g, of sodium sulfate per 100g of lithium-bearing mica), in a mixture comprising the potassium sulfate, the calcium sulfate and lithium-bearing mica to reduce (e.g. suppress or inhibit, for example, prevent) sintering and/or fusion (e.g. melting) of the mixture during calcination of the mixture (for example, by any method described herein) to extract lithium from the lithium-bearing mica.

For example, the invention extends to the use of potassium sulfate as a sintering and/or fusion suppressor (e.g. inhibitor, for example, preventor) in the extraction of lithium from lithium-bearing mica (for example, by any method described herein), wherein the extraction of lithium from the lithium-bearing mica comprises calcining the lithium-bearing mica in the presence of calcium sulfate and the potassium sulfate. For example, the invention extends to the use of potassium sulfate as a sintering and/or fusion suppressor (e.g. inhibitor, for example, preventor) in the extraction of lithium from lithium-bearing mica (for example, by any method described herein), wherein the extraction of lithium from the lithium-bearing mica comprises calcining the lithium-bearing mica in the presence of calcium sulfate and the potassium sulfate, without the use of sodium sulfate, or with a low amount of sodium sulfate (e.g. from about 5 g to about 20 g, preferably from about 5 g to about 10 g, of sodium sulfate per 100g of lithium-bearing mica).

### Modifications and combinations

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

### Example 1

Lithium was extracted from a lithium-bearing mica ore by the following method.

34 samples M1 to M34 containing the lithium-bearing mica ore, from the same batch, were ground and have the compositions and d₈₀ shown in Table 1.

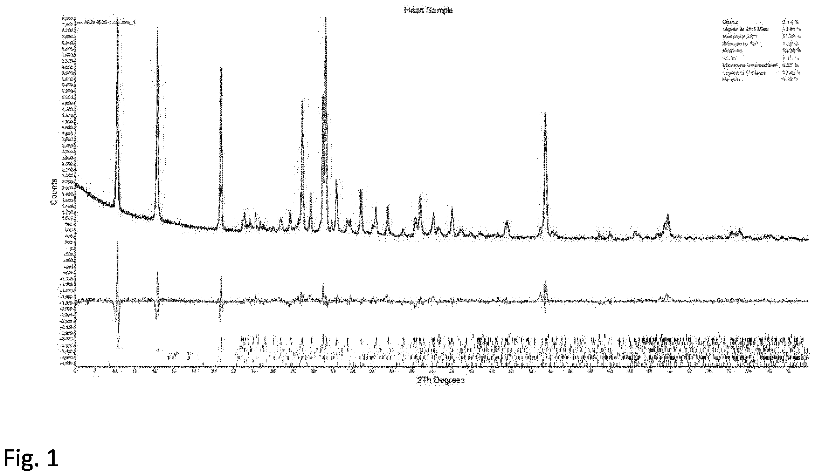

The ore was a mica obtained from Imerys Ceramics, France, obtained from the Imerys Kaolins de Beauvoir mine in France. The mineral composition of the mica was determined using powder X-ray diffraction (XRD). The powder XRD pattern for the mica is provided as Figure 1. The relative amount of each mineral phase present was estimated using the reference intensity ratio (RIR) method. As can be seen in Figure 1, the lithium-bearing mica was found to contain mainly lepidolite (61.07 wt. % of the mica) with muscovite (11.78 wt. % of the mica) and smaller amounts of zinnwaldite (1.32 wt. % of the mica), as well as kaolinite (17.34 wt. % of the mica), quartz (3.14 wt. % of the mica) feldspar (8.45 wt. % of the mica), and petalite (0.52 wt. % of the mica) impurities.

The chemical composition of the mica was determined by the following methods:
- Energy Dispersive X-Ray Fluorescence (EDXRF @ Zetium XRF Spectrometer from Malvern) to determine SiO₂, Al₂O₃contents;
- Inductively Coupled Plasma Optical Emission Spectrometry (ICP-OES @Agilent 5800 ICP-OES) to determine Ag, Al, As, Ba, Be, Bi, Ca, Cd, Co, Cr, Cu, Fe, K, Li, Mg, Mn, Mo, Na, Ni, P, Pb, Sb, Se, Sn, Sr, Ti, TI, V, Y, Zn and Si contents;
- Inductively Coupled Plasma Mass Spectrometry (ICP-MS @Agilent 7850 ICP-MS) to determine Rb and Cs contents; and
- Ion selective electrode analysis @ Thermo Fisher 9409 BN electrode to determine F contents.

The results are shown in Tables 2 and 3.

The d₈₀, as measured by laser scattering, of the ore used in each mixture is provided in Table 1.

Salt 1 was hydrated calcium sulfate (CaSO₄·2H₂O) in the form of gypsum. Salt 2 was sodium sulfate (Na₂SO₄). Salt 3 was potassium sulfate (K₂SO₄).

**Table 1.**

| | **Ore (g)** | **Salt 1 (g)** | **Salt 2 (g)** | **Salt 3 (g)** | **d₈₀ of Ore (µm)** |
|---|---|---|---|---|---|
| **M1** | 100 | 70 | 70 | - | 150 |
| **M2** | 100 | 70 | 70 | - | 150 |
| **M3** | 100 | 35 | 35 | - | 150 |
| **M4** | 100 | 35 | 35 | - | 150 |
| **M5** | 100 | 65 | 35 | - | 150 |
| **M6** | 100 | 65 | 35 | - | 150 |
| **M7** | 100 | 70 | 70 | - | 150 |
| **M8** | 100 | 50 | 50 | - | 150 |
| **M9** | 100 | - | 70 | - | 150 |
| **M10** | 100 | 15 | 55 | - | 150 |
| **M11** | 100 | 65 | 35 | - | 150 |
| **M12** | 100 | - | 35 | - | 150 |
| **M13** | 100 | 70 | - | 70 | 150 |
| **M14** | 100 | 70 | - | 70 | 150 |
| **M15** | 100 | 70 | - | 70 | 150 |
| **M16** | 100 | 35 | - | 35 | 150 |
| **M17** | 100 | 35 | - | 35 | 150 |
| **M18** | 100 | 35 | - | 35 | 150 |
| **M19** | 100 | 65 | - | 35 | 150 |
| **M20** | 100 | 65 | - | 35 | 150 |
| **M21** | 100 | 65 | - | 35 | 150 |
| **M22** | 100 | 70 | - | 70 | 150 |
| **M23** | 100 | 50 | - | 50 | 150 |
| **M24** | 100 | - | - | 70 | 150 |
| **M25** | 100 | 15 | - | 55 | 150 |
| **M26** | 100 | 35 | - | 35 | 150 |
| **M27** | 100 | 35 | - | 35 | 200 |
| **M28** | 100 | 35 | - | 35 | 293 |
| **M29** | 100 | 25 | - | 25 | 150 |
| **M30** | 100 | 45 | - | 25 | 150 |
| **M31** | 100 | 70 | 31 | 39 | 150 |
| **M32** | 100 | 70 | 31 | 39 | 150 |
| **M33** | 100 | - | 31 | 39 | 150 |
| **M34** | 100 | 35 | 16 | 19 | 150 |

**Table 2.**

| | |
|---|---|
| SiO₂ | 51.5 wt. % |
| Al₂O₃ | 26.8 wt. % |
| Fe₂O₃ | 0.49 wt. % |
| Na₂O | 0.26 wt. % |
| K₂O | 7.77 wt. % |
| Other oxides | 0.32 wt. % |
| Li₂O | 3.9 wt. % |
| Loss on ignition | 4.73 wt. % |
| Total | 95.8 wt. % |

**Table 3.**

| | |
|---|---|
| Li | 18200 g/t |
| Cs | 1530 g/t |
| Rb | 12000 g/t |
| F | 6.15 wt. % |

The mineral feed was ground to a particle size d80 of 150 µm and labelled as the sample indicated; and then mixed with Salt 1, Salt 2 and/or Salt 3, as indicated in Table 1.

Each mixture was placed in a quartz crucible. The quartz crucible was placed into a muffle furnace. The muffle furnace was heated to the roasting temperature shown in Table 4. Each mixture was roasted at the roasting temperature for the roasting time shown in Table 4. The roasting time was recorded from the time at which the roasting temperature was reached after the initial heating until the time the furnace was switched off and the door was opened. Each sample was allowed to cool inside the furnace until room temperature was reached.

The quality of the calcined material for each sample was assessed by visual observation and rated between 1 and 4. A value of 1 means that there was widespread fusion of the sample which had to be chiselled out of the crucible. A value of 2 means that the sample was sintered but broke up easily for removal from the crucible. A value of 3 means that there was minor sintering of the sample but the sample broke up easily for removal from the crucible. A value of 4 means that the calcined sample was soft and sandy with no visible fusion or sintering. The results are shown in Table 4.

For each sample, the calcined material was ground with a mortar. Then, between 100 g and 150 g of each crushed sample was mixed with sufficient water to achieve a liquid to solid ratio of 10/1 by weight. The water was heated to 90 °C and the mixing was carried out by mechanical agitation, with a mechanical stirrer, for 60 minutes. The solids were then separated from the liquid fusing a Büchner funnel, leaving behind a filtrate known as a pregnant leach solution. The separated solids were washed with three times the amount of water and the wash water was retained for chemical analysis. The washed separated solids were then dried in an oven.

The chemical composition of the pregnant leach solution, the dried separated solids and the wash water was analysed using the EDXRF, ICP-OES, ICP-MS and Ion selective electrode analysis methods described hereinabove. The % of each of Li, Cs and Rb that is extracted in relation to the overall quantity of each of Li, Cs, and Rb as present in each of the mixtures M1 to M34 was determined and the results are shown in Table 4.

**Table 4.**

| | **Roasting Temperature (°C)** | **Roasting time (minutes)** | **Calcine Quality** | **Li extraction (wt. %)** | **Cs extraction (wt. %)** | **Rb extraction (wt. %)** |
|---|---|---|---|---|---|---|
| **M1** | 800 | 120 | 1 | 87 | 11 | 12 |
| **M2** | 900 | 120 | 1 | 90 | 30 | 28 |
| **M3** | 800 | 120 | 2 | 83 | 19 | 21 |
| **M4** | 900 | 120 | 1 | - | - | - |
| **M5** | 800 | 120 | 1 | 85 | 24 | 26 |
| **M6** | 900 | 120 | 1 | 93 | 34 | 38 |
| **M7** | 850 | 120 | 1 | 92 | 14 | 14 |
| **M8** | 900 | 120 | 1 | 88 | 17 | 15 |
| **M9** | 900 | 120 | 1 | 79 | 27 | 26 |
| **M10** | 900 | 120 | 1 | 76 | 21 | 18 |
| **M11** | 900 | 60 | 1 | 90 | 21 | 22 |
| **M12** | 900 | 120 | 1 | 71 | 14 | 16 |
| **M13** | 800 | 120 | 2 | 57 | 3 | 19 |
| **M14** | 900 | 120 | 2 | 95 | 4 | 22 |
| **M15** | 1000 | 120 | 1 | 96 | 3 | 21 |
| **M16** | 800 | 120 | 4 | 52 | 1 | 8 |
| **M17** | 900 | 120 | 2 | 92 | 1 | 7 |
| **M18** | 1000 | 120 | 2 | 94 | 1 | 7 |
| **M19** | 800 | 120 | 4 | 49 | 1 | 8 |
| **M20** | 900 | 120 | 2 | 92 | 1 | 8 |
| **M21** | 1000 | 120 | 2 | 95 | 2 | 10 |
| **M22** | 850 | 120 | 3 | 92 | 4 | 23 |
| **M23** | 900 | 120 | 2 | 94 | 2 | 13 |
| **M24** | 900 | 120 | 2 | 95 | 2 | 11 |
| **M25** | 900 | 120 | 2 | 96 | 2 | 12 |
| **M26** | 900 | 60 | 2 | 91 | 1 | 8 |
| **M27** | 900 | 120 | 2 | 90 | 1 | 7 |
| **M28** | 900 | 120 | 2 | 87 | 1 | 7 |
| **M29** | 900 | 120 | 3 | 86 | 1 | 5 |
| **M30** | 900 | 120 | 3 | 87 | 1 | 6 |
| **M31** | 800 | 120 | 3 | 88 | 1 | 9 |
| **M32** | 900 | 120 | 1 | 93 | 1 | 7 |
| **M33** | 900 | 120 | 2 | 93 | 1 | 5 |
| **M34** | 900 | 120 | 2 | 89 | 0 | 3 |

The results indicate that a Li extraction of at least 90 % can be achieved when the roasting temperature is at least 850 °C. However, fusion of the samples is more likely as the roasting temperature increases.

The inventors have found that a balance between Li extraction and avoidance of sample fusion can be achieved by varying the salts included in the mixture, for example, by including both calcium sulfate and potassium sulfate in the mixture. This effect can be enhanced by carrying out the roasting at a roasting temperature above 800 °C and below 1000 °C. This is enhanced even further when the potassium sulfate is present in the mixture at a concentration of at least 25 g per 100 g of ore.

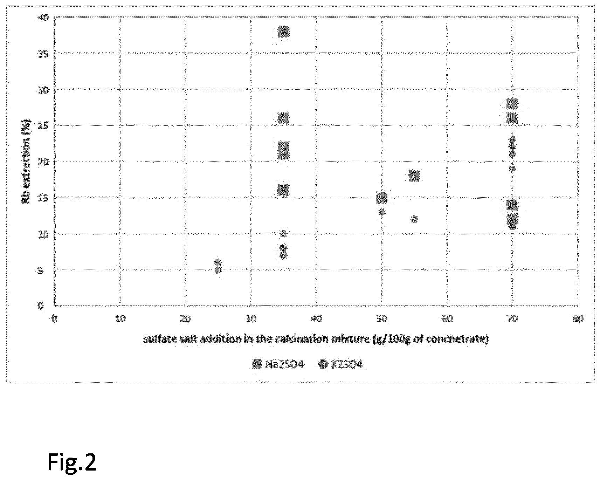

Figure 2 shows the amount of Rb extracted from the ore as a function of the amount of sodium sulfate or potassium sulfate added when a lithium-bearing mica is calcined with sodium sulfate or potassium sulfate.

## Claims

1. A method for extracting lithium from lithium-bearing mica, the method comprising: calcining the lithium-bearing mica which has a particle size d80 of less than about 250 microns in the presence of potassium sulfate in the range of from 32 to 55 g per 100 g of lithium-bearing mica and calcium sulfate in the range of 15 to 65 g per 100 g of lithium-bearing mica at a temperature from about 850 °C to about 1050 °C to produce a calcined material.

2. A method for extracting lithium from lithium-bearing mica, comprising:
calcining the lithium-bearing mica which has a particle size d80 of less than about 250 microns at a temperature in the range of from about 850 to about 1050 °C in the presence of potassium sulfate in the range of from 32 to 55 g per 100 g of mica and calcium sulfate in the range of 15 to 65 g per 100 g of lithium bearing mica to produce a higher yield of lithium and a reduced amount of cesium in comparison to the same method for the same composition of lithium bearing mica in which the potassium sulfate and the calcium sulfate are outside the aforedefined ranges.

3. Use of potassium sulfate and calcium sulfate to extract lithium from lithium-bearing mica, for example, wherein the lithium-bearing mica has a particle size d80 of less than about 250 microns, and is calcined in the presence of the potassium sulfate in the range of from 32 to 55 g per 100 g of lithium-bearing mica and the calcium sulfate in the range of 15 to 65 g per 100 g of lithium-bearing mica to produce a calcined material at a temperature from about 850 °C to about 1050 °C.

4. The method according to claim 1 or claim 2, or the use according to claim 3, wherein calcining the lithium-bearing mica in the presence of potassium sulfate and calcium sulfate comprises calcining a mixture comprising:
(a) a lithium-bearing mica;
(b) from about 32 g to about 50 g, for example from about 32 g to about 40 g, or from about 35 g to about 40g, of potassium sulfate per 100 g of lithium-bearing mica; and
(c) from about 15 g to about 50 g, for example, from about 30 g to about 40 g, of calcium sulfate per 100 g of lithium-bearing mica.

5. The method or use according to claim 4, wherein the mixture comprises less than about 20 g, for example, less than about 10 g, or less than about 8 g, of sodium sulfate per 100 g of lithium-bearing mica, optionally wherein the mixture is substantially free of sodium sulfate, or optionally wherein the mixture comprises at least about 5 g of sodium sulfate per 100 g of lithium-bearing mica.

6. The method or use according to claim 4 or claim 5, wherein the mixture comprises, per 100 g of lithium-bearing mica:
(a) less than about 5 g, of each of metal oxides, metal hydroxides, metal sulphides, metal carbonates and/or metal chlorides, optionally wherein the mixture is substantially free of metal oxides, metal hydroxides, metal sulphides, metal carbonates and/or metal chlorides, wherein the metal is optionally an alkali metal, an alkaline earth metal, or a transition metal.

7. The method or use according to any of claims 4 to 6, wherein the mixture consists essentially of the lithium-bearing mica, the potassium sulfate and the calcium sulfate, or wherein the mixture consists essentially of the lithium-bearing mica, the potassium sulfate, the calcium sulfate and the sodium sulfate.

8. The method or use according to any of claims 4 to 7, wherein the lithium-bearing mica has a d₈₀ from about 50 µm to about 250 µm, for example, from about 100 µm to about 200 µm.

9. The method or use according to any of claims 4 to 8, wherein the method or use comprises calcining the mixture at a temperature from about 900 °C to about 1000 °C, for example for from about 10 minutes to about 180 minutes, or from about 15 minutes to about 60 minutes.

10. The method or use according to any preceding claim, wherein the lithium-bearing mica comprises lepidolite, muscovite, polylithionite and/or zinnwaldite.

11. The method or use according to any preceding claim, wherein the calcium sulfate is provided in the form of (a) calcium sulfate dihydrate, for example, gypsum, (b) anhydrous calcium sulfate, and/or (c) calcium sulfate hemihydrate.

12. The method or use according to any of claims 1 to 11, further comprising leaching the calcined material with an aqueous solvent to form a solution containing lithium.

13. Use of potassium sulfate and calcium sulfate to reduce extraction of rubidium during extraction of lithium from lithium-bearing mica, optionally:
(a) wherein the lithium-bearing mica which has a particle size d80 of less than about 250 microns is calcined in the presence of the potassium sulfate in the range of from 32 to 55 g per 100 g of lithium-bearing mica and the calcium sulfate in the range of 15 to 65 g per 100 g of lithium-bearing mica at a temperature from about 850 °C to about 1050 °C to produce a calcined material ;and
(b) such that less than about 15 wt. %, or less than about 10 wt. %, or less than about 9 wt. %, or less than about 8 wt. %, or less than about 7 wt. %, or less than about 6 wt. %, of the rubidium in the lithium-bearing mica is extracted.

14. Use according to claim 13, to further reduce sintering and/or fusion of the mixture during calcination of the mixture to extract lithium from the lithium-bearing mica.
